# FASCICULE DE BREVET EUROPEEN

(11) **EP 4 153 856 B1**
(45) Date de publication et mention de la délivrance du brevet: **14.05.2025**
(21) Numéro de dépôt: 21732459.9
(22) Date de dépôt: 17.05.2021
(51) Int. Cl.: F02K 1/72

(54) **INVERSEUR DE POUSSEE POUR UNE NACELLE D'UN TURBOREACTEUR A DOUBLE FLUX D'AERONEF**
SCHUBUMKEHRVORRICHTUNG FÜR EINE BYPASS-TURBODÜSEN-TRIEBWERKSGONDEL EINES FLUGZEUGS
THRUST REVERSER FOR AN AIRCRAFT BYPASS TURBOJET ENGINE NACELLE

(30) Priorité: 20.05.2020 FR 2005254
(43) Date de publication de la demande: 29.03.2023
(73) Titulaire: Safran Nacelles, 76700 Gonfreville-l'Orcher (FR)
(72) Inventeur: CAZUC, Xavier, 77550 MOISSY-CRAMAYEL (FR); JORET, Jean-Philippe, 77550 MOISSY-CRAMAYEL (FR); PEYRON, Vincent Jean-François, 77550 MOISSY-CRAMAYEL (FR); PASCAL, Sébastien Laurent Marie, 77550 MOISSY-CRAMAYEL (FR)
(74) Mandataire: Gevers & Orès
(86) Numéro de dépôt international: PCT/FR2021/050846
(87) Numéro de publication internationale: WO 2021/234254

(56) Documents cités:
- WO-A1-2014/044964
- FR-A1- 2 981 989
- US-A- 4 998 409
- US-A- 5 806 302

## Description

### Domaine technique de l'invention

L'invention est relative au domaine des nacelles de turboréacteur à double flux d'aéronef, et en particulier aux inverseurs de poussée qui équipent ces nacelles.

### Arrière-plan technique

L'état de la technique comporte notamment le document US 4 998 409 A.

Les inverseurs de poussée sont aujourd'hui largement répandus dans les nacelles d'aéronef et, en particulier, dans les nacelles qui abritent un turboréacteur à double flux. De manière connue, un tel turboréacteur génère, par l'intermédiaire des pâles d'une soufflante en rotation, un flux d'air chaud (appelé flux primaire) issu d'une chambre de combustion, et un flux d'air froid (appelé flux secondaire) qui circule à l'extérieur du turboréacteur à travers un canal annulaire, formé entre un carénage du turboréacteur et une paroi interne de la nacelle. Les deux flux d'air sont ensuite éjectés hors du turboréacteur par l'arrière de la nacelle et génèrent ainsi une poussée.

Dans une telle configuration, le rôle d'un inverseur de poussée est, lors d'une phase d'atterrissage de l'aéronef, d'améliorer sa capacité de freinage au sol en redirigeant vers l'avant au moins une partie de la poussée générée par le turboréacteur. En particulier, lorsque l'inverseur de poussée est en action, il obstrue le canal annulaire du flux d'air froid (i.e. le flux secondaire) et dirige ce flux vers l'avant de la nacelle, générant de ce fait une contre-poussée.

Les moyens mis en œuvre pour réaliser cette réorientation du flux d'air froid varient suivant le type d'inverseur. Cependant, dans tous les cas, la structure d'un inverseur de poussée comprend des capots mobiles déplaçables entre, d'une part, une position déployée (aussi appelée position d'inversion de poussée) dans laquelle ils ouvrent dans la nacelle un passage destiné au flux dévié, et d'autre part, une position d'escamotage (aussi appelée position de jet direct) dans laquelle ils ferment ce passage. Les capots peuvent ainsi remplir une fonction d'activation d'autres moyens de déviation tels que des volets. Dans ce cas, les volets, actionnés par le déplacement des capots mobiles, viennent obstruer, au moins en partie, le canal dans lequel circule le flux secondaire. En outre, dans le cas d'un inverseur de poussée dit à grilles de déviation, la réorientation du flux d'air est ensuite effectuée par des grilles de déviation.

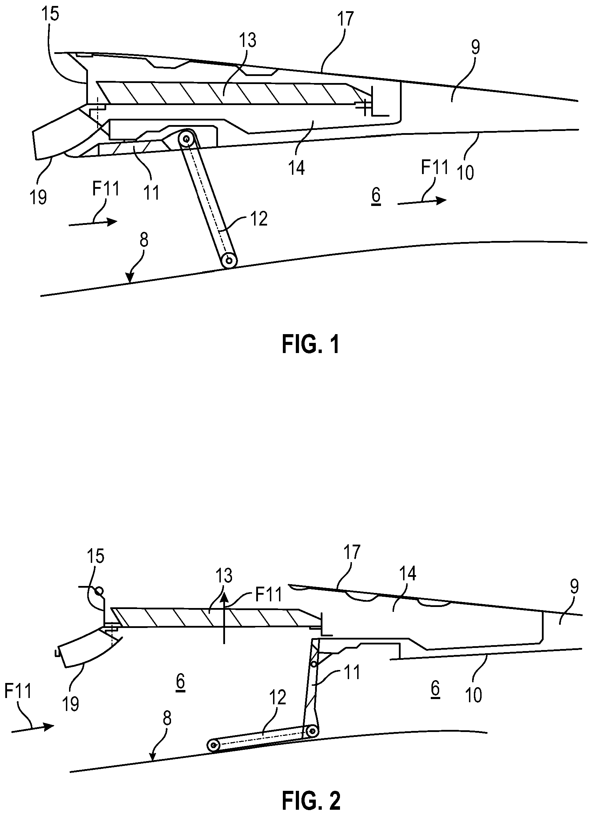

Un inverseur de l'art antérieur est illustré aux figures 1 et 2. Cet inverseur est du type inverseur à grilles ou inverseur à cascades.

Ce type d'inverseur comporte au moins un capot mobile 9 par rapport à une partie fixe comportant un cadre annulaire amont 15, ledit capot 9 présentant une paroi externe 17 et une paroi interne 10 destinée à délimiter, dans une position de jet direct du turboréacteur (figure 1), une paroi externe du canal annulaire 6 dans lequel s'écoule le flux secondaire F11. L'inverseur comporte en outre au moins un volet 11 monté de manière articulée sur le capot mobile 9 et actionné par au moins une bielle 12 lors du déplacement du capot mobile vers l'aval, de sorte que, dans une position d'inversion de poussée (figure 2), chaque volet 11 comporte une zone s'étendant dans le canal annulaire 6 de manière à dévier au moins une partie du flux secondaire F11 hors dudit canal annulaire 6.

Dans le cas de ce type d'inverseur, la réorientation du flux secondaire F11 est effectuée par des grilles de déviation 13, le capot mobile 9 n'ayant qu'une simple fonction de coulissement visant à découvrir ou recouvrir ces grilles 13, la translation du capot mobile 9 s'effectuant selon un axe longitudinal sensiblement parallèle à l'axe de la nacelle 1 et de l'inverseur.

Un logement 14 est ménagé dans le capot 10 et permet de loger les grilles 13 lorsque l'inverseur n'est pas actionné, c'est-à-dire en position de jet direct, comme cela est représenté à la figure 1.

Les grilles 13 sont disposées de manière adjacente les unes par rapport aux autres, dans une zone annulaire entourant le canal annulaire 6, les grilles 13 étant disposées bord à bord de manière à ce qu'aucun intervalle ne soit ménagé entre celles-ci. De cette manière, l'ensemble du flux secondaire F11 dévié par les volets 10 passe au travers des grilles 13. Les moyens de déplacement et de guidage des capots mobiles 9 (non représentés) sont disposés sous les grilles 13.

Un carénage annulaire de déviation 19, couramment appelé bord de déviation, recouvre la périphérie interne du cadre 15. Ce carénage 19 a en section une forme arrondie et s'étend depuis la périphérie externe du canal annulaire 6 jusqu'à l'extrémité amont des grilles 13.

Pour des raisons d'efficacité, le carénage 19 doit présenter un rayon de courbure important. En outre, afin de pouvoir augmenter au maximum la longueur des grilles 13 de manière à dévier au maximum le flux secondaire F11 vers l'amont, il est nécessaire de disposer les grilles 13 le plus proche possible de la paroi externe 17 du capot 9. La longueur limitée du logement du capot et le rayon important du carénage 19 ont pour effet de réduire la longueur des grilles 13.

Afin de pallier cet inconvénient, il est connu de disposer obliquement les grilles 13. L'ensemble des grilles s'étend alors à la façon d'un tronc de cône, autour du canal annulaire 6.

Le document EP-A1-1 229 237 décrit un tel inverseur, dans lequel les grilles sont disposées obliquement. Dans ce cas toutefois, il n'est plus possible de disposer les moyens de déplacement et de guidage du capot mobile sous les grilles. Les grilles sont alors écartées les unes des autres de manière à ce que les moyens de déplacement et de guidage précités soient disposés entre deux grilles adjacentes.

Dans ce cas, une partie du flux secondaire peut s'échapper dans l'intervalle ménagé entre les grilles, ce qui a pour effet de diminuer la déviation du flux secondaire et donc l'efficacité de l'inverseur.

Par ailleurs, le cadre 15 d'un inverseur de poussée est une pièce structurale qui a plusieurs fonctions et qui peut être complexe et coûteux à réaliser. Le cadre 15 assure la fixation et le maintien des grilles 13 à leurs extrémités amont. Le cadre 15 maintient le carénage 19 qui limite les perturbations dans l'écoulement de l'air à travers les grilles 13. Enfin, le cadre 15 peut être utilisé pour supporter les moyens de déplacement (non représentés) des capots 9 et doit donc supporter des efforts relativement importants.

Un cadre 15 d'inverseur de poussée est en général formé par l'assemblage de plusieurs pièces et en particulier de plusieurs tôles.

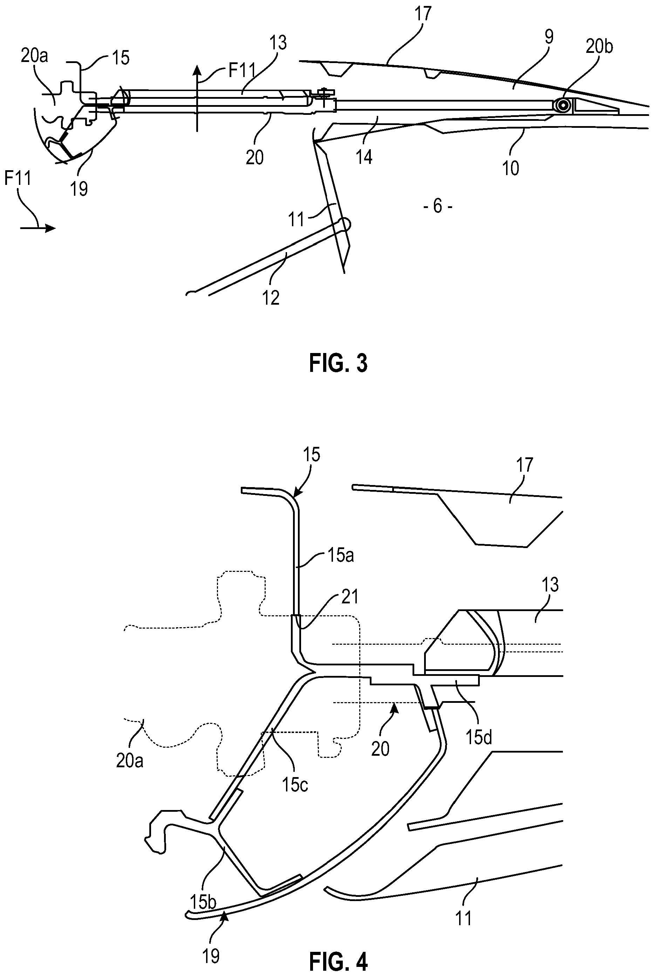

Les figures 3 et 4 illustrent un autre inverseur de poussée de l'art antérieur et montrent la position d'un des moyens de déplacement des capots 9 entre leurs deux positions précitées, ces moyens de déplacement se présentant sous la forme d'un actionneur 20. L'actionneur 20 a une forme allongée et s'étend parallèlement à l'axe longitudinal de la nacelle et de l'inverseur de poussée. Il a une extrémité amont 20a fixée à la partie fixe comportant le cadre 15, et une extrémité aval 20b qui est fixée aux capots 9.

Comme cela est mieux visible à la figure 4, le cadre 15 est formé par l'assemblage de plusieurs pièces 15a, 15b, 15c, 15d, etc., et une ouverture 21 de taille importante est formée en direction axiale à travers le cadre 15 pour autoriser le montage de l'actionneur 20. Cette ouverture 21 s'étend sur plusieurs des pièces ainsi que dans leurs zones de jonction, ce qui fragilise le cadre 15 et peut nécessiter de le surdimensionner, et en particulier de le rallonger le long de l'axe ou de l'épaissir en direction radiale, pour assurer le maintien en position des grilles 13.

L'invention propose notamment un perfectionnement à la technologie existante qui permet de simplifier la réalisation et en particulier la fabrication du cadre de l'inverseur de poussée.

### Résumé de l'invention

La présente invention propose un inverseur de poussée pour une nacelle d'un turboréacteur à double flux d'aéronef, cet inverseur de poussée ayant une forme générale annulaire autour d'un axe et comportant :
- une partie amont fixe comportant un cadre annulaire,
- un support annulaire aval,
- des grilles de déviation dont des extrémités amont sont fixées audit cadre et dont des extrémités aval sont fixées audit support,
- des capots mobiles en translation depuis une position amont dans laquelle ils recouvrent les grilles jusqu'à une position aval d'inversion de poussée dans laquelle les grilles sont découvertes,
- des éléments de déviation d'un flux secondaire du turboréacteur à travers les grilles lorsque les capots sont dans leur position aval, et
- des actionneurs de forme allongée dont des extrémités amont sont fixées à la partie fixe et dont des extrémités aval sont fixées auxdits capots,
caractérisé en ce que ledit cadre comprend :
- une première paroi tronconique évasée vers l'aval et comportant un bord périphérique amont configuré pour être fixé à un carter du turboréacteur, et un bord périphérique aval s'étendant dans le prolongement de la paroi et servant à la fixation des extrémités amont des grilles, et
- une seconde paroi annulaire qui s'étend radialement vers l'extérieur depuis une face tronconique externe de ladite première paroi,
lesdites première et seconde parois étant réalisées d'une seule pièce et ladite seconde paroi comportant des orifices axiaux traversés par lesdits actionneurs.

L'invention est avantageuse dans la mesure où le cadre de l'inverseur de poussée est formé d'une seule pièce et est donc monobloc. Cela simplifie sa conception et sa fabrication, de préférence par usinage d'un bloc de matière par exemple sous forme d'une plaque. Par ailleurs, les actionneurs traversent des orifices formés dans une seule des parois du cadre ce qui simplifie le montage et affecte peu la tenue mécanique du cadre. De plus, la première paroi du cadre a une forme tronconique dont le bord aval est configuré pour être fixé directement aux extrémités amont des grilles, ce qui est particulièrement avantageux lorsque ces grilles sont inclinées par rapport l'axe de l'inverseur et s'étendent sensiblement dans le prolongement de cette paroi. L'inverseur selon l'invention peut comprendre une ou plusieurs des caractéristiques suivantes, prises isolément les unes des autres ou en combinaison les unes avec les autres :
- lesdits actionneurs s'étendent parallèlement audit axe ;
- chacune desdites grilles s'étend dans un plan qui est incliné d'un angle compris entre 5 et 20° par rapport audit axe ;
- lesdits actionneurs s'étendent chacun entre deux grilles adjacentes et traversent chacun les plans de ces grilles ;
- lesdits actionneurs ont leurs extrémités aval qui sont entourées à distance par ledit support ;
- ladite seconde paroi présente une face amont comportant des premiers évidements et une face aval présentant des seconds évidements, lesdits orifices étant formés au fond desdits premiers évidements ;
- au moins deux cloisons parallèles entre elles et à ledit axe s'étendent dans chacun desdits premiers évidements, ces cloisons étant reliées au fond de l'évidement et étant disposées de part et d'autre dudit orifice ;
- les actionneurs sont fixés auxdites cloisons ;
- lesdits seconds évidements sont formés par une multitude de cavités définies par des premiers voiles annulaires et des seconds voiles radiaux ;
- le cadre comprend une troisième paroi annulaire qui s'étend radialement vers l'intérieur depuis une face tronconique interne de ladite première paroi, des nervures de rigidification s'étendant radialement entre cette face tronconique interne et une face annulaire aval de cette troisième paroi ;
- un carénage annulaire de déviation prend appui et est fixé d'une part sur une périphérie interne de ladite troisième paroi et sur une extrémité aval de ladite face tronconique interne ;

La présente invention concerne également un turboréacteur à double flux pour un aéronef, comportant un inverseur de poussée tel que décrit ci-dessus.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 est une vue schématique partielle, en coupe longitudinale, d'un inverseur de poussée selon l'art antérieur en position de jet direct ;
- la figure 2 est une vue schématique partielle, en coupe longitudinale, de l'inverseur de poussée de la figure 1 en position d'inversion de poussée ;
- la figure 3 est une vue schématique partielle, en coupe longitudinale, d'un autre inverseur de poussée selon l'art antérieur en position d'inversion de poussée ;
- la figure 4 est une vue à plus grande échelle d'une partie de l'inverseur de poussée de la figure 3 ;
- la figure 5 est une vue schématique partielle, en coupe longitudinale, d'un inverseur de poussée selon un mode de réalisation de l'invention en position de jet direct ;
- la figure 6 est une vue schématique partielle, en coupe longitudinale, de l'inverseur de poussée de la figure 5 en position d'inversion de poussée ;
- la figure 7 est une vue à plus grande échelle d'une partie de l'inverseur de poussée de la figure 5 ;
- la figure 8 est une vue schématique partielle, en coupe longitudinale, du cadre de l'inverseur de poussée de la figure 5 ;
- la figure 9 est une vue schématique partielle, en perspective, de l'inverseur de poussée de la figure 5, vu depuis l'aval ;
- la figure 10 est une vue schématique partielle, en perspective, de l'inverseur de poussée de la figure 5, vu depuis l'amont ;
- la figure 11 est une vue schématique partielle, en perspective, du cadre de l'inverseur de poussée de la figure 5, vu depuis l'amont ; et
- la figure 12 est une vue schématique partielle, en perspective, du cadre de l'inverseur de poussée de la figure 5, vu depuis l'aval.

### Description détaillée de l'invention

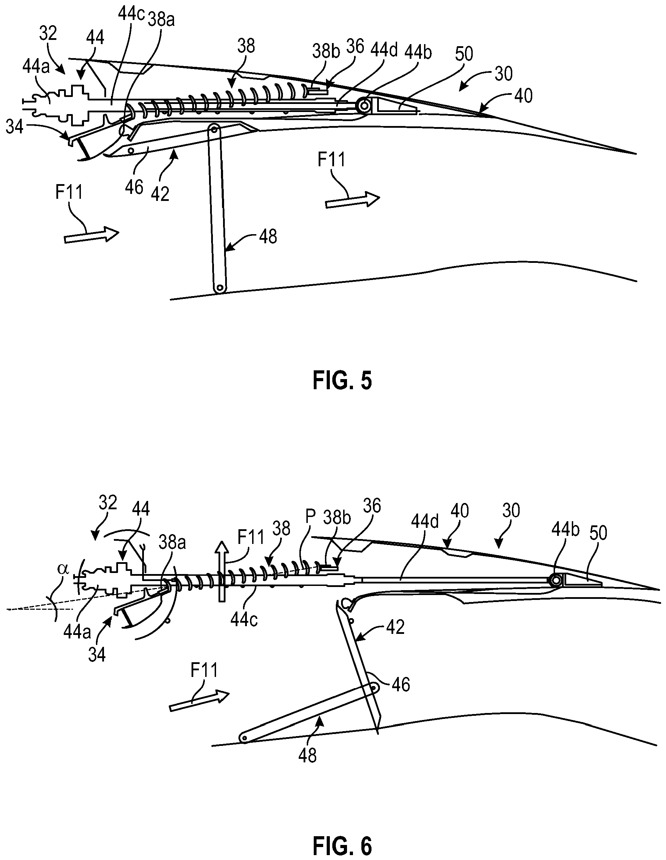

On se réfère désormais aux figures 5 à 12 qui illustrent un mode préféré de réalisation d'un inverseur de poussée 30 selon l'invention pour une nacelle de turboréacteur d'aéronef.

L'inverseur de poussée 30 a une forme générale annulaire autour d'un axe (non visible) qui est l'axe longitudinal du turboréacteur et de sa nacelle. L'inverseur de poussée 30 comporte :
- une partie amont fixe 32 comportant un cadre annulaire 34,
- un support annulaire aval 36,
- des grilles de déviation 38 dont des extrémités amont 38a sont fixées au cadre 34 et dont des extrémités aval 38b sont fixées au support 36,
- des capots 40 mobiles en translation depuis une position amont représentée à la figure 5, dans laquelle ils recouvrent et renferment les grilles 38 jusqu'à une position aval d'inversion de poussée représentée à la figure 6, dans laquelle les grilles 38 sont découvertes et donc libres,
- des éléments 42 de déviation du flux secondaire F11 du turboréacteur à travers les grilles 38 lorsque les capots 40 sont dans leur position aval, et
- des actionneurs 44 de forme allongée dont des extrémités amont 44a sont fixées à la partie fixe 32 et dont des extrémités aval 44b sont fixées aux capots 40.

Les éléments de déviation 42 peuvent comprendre des volets 46 associées à des bielles 48, comme dans la technique antérieure.

Les capots 40 peuvent être similaires à ceux de la technique antérieure et ne seront pas plus décrits plus en détail.

Les actionneurs 44 sont de préférence des vérins. Ils sont par exemple au nombre de deux ou plus, et régulièrement répartis autour de l'axe de l'inverseur. Chaque inverseur 44 comprend un corps 44c fixe et une tige 44c mobile. Dans l'exemple représenté, le corps 44c est fixé à la partie fixe 32 et la tige 44d est fixée au(x) capot(s) 40. On comprend donc que c'est l'extrémité amont 44a du corps 44c qui est fixée à la partie fixe 32, et que l'extrémité aval 44b de la tige 44c est fixée au(x) capot(s).

La fixation de la tige 44d au(x) capot(s) 40 est ici réalisée par une chape 50 rapportée et fixée sur le(s) capot(s) 40. La fixation du corps 44c sera décrite plus en détail dans ce qui suit.

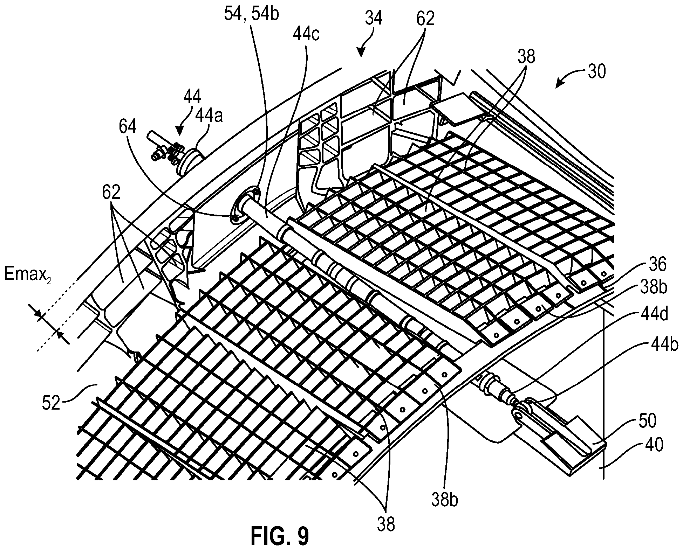

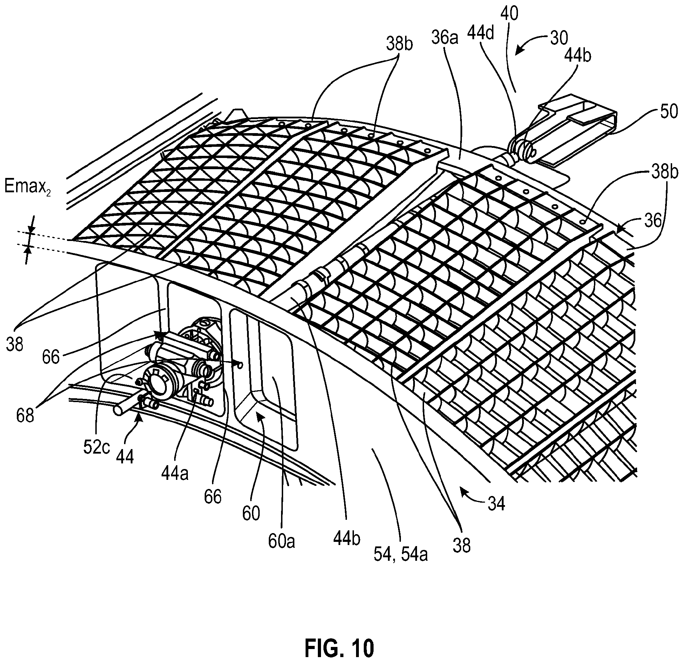

Les grilles de déviation 38 sont similaires à celles de la technique antérieure à l'exception du fait que, dans l'exemple représenté, elles s'étendent chacune dans un plan P qui est incliné d'un angle α, compris entre 5 et 20° par rapport à l'axe de l'inverseur (figure 6). On constate que les plans P des grilles 38 sont traversés par les actionneurs 44. Comme cela est visible aux figures 9 et 10 notamment, chacun des actionneurs 44 passe entre les bords longitudinaux en regard de deux grilles 38 adjacentes. Les grilles 38, disposées de part et d'autre d'un actionneur 44, sont donc à distance circonférentielle l'une de l'autre pour laisser un passage pour l'actionneur. Les grilles 38 adjacentes qui ne sont pas disposées de part et d'autre d'un actionneur sont au contraire disposées circonférentiellement bord à bord.

Le support 36 s'étend de préférence en continu sur 360° autour de l'axe de l'inverseur 30. Il est formé par un anneau dans l'exemple représenté.

Les extrémités aval 38b des grilles 38 sont appliquées sur une face annulaire externe 36a du support 36 et sont fixées au support par soudage ou par des moyens de fixation du type vis-écrou par exemple (figure 10).

On constate que le support 36 s'étend autour des actionneurs 44. Les figures 5 et 6 permettent en effet de constater que les actionneurs 44 sont situés à une certaine distance de ce support 38.

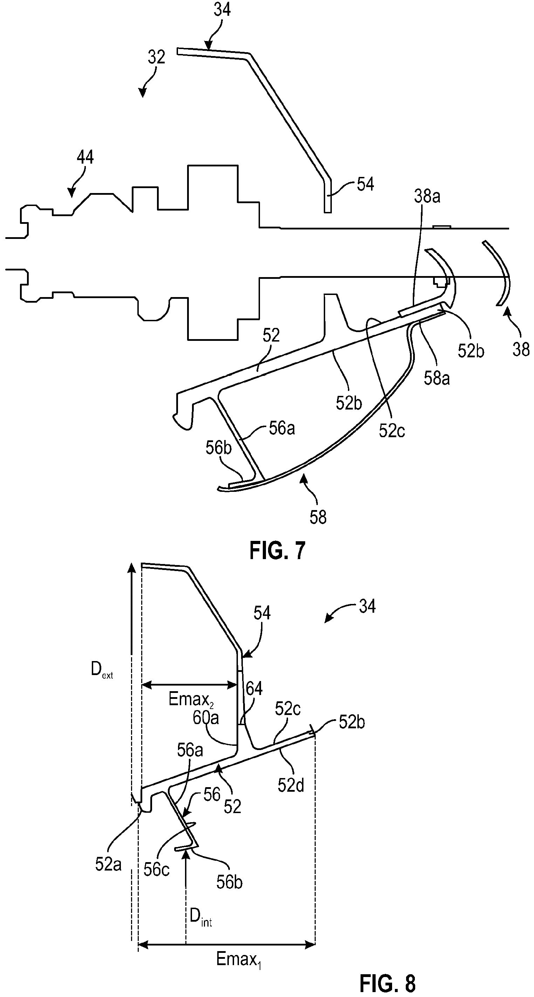

Les extrémités amont 38a des grilles 38 sont appliquées sur une face tronconique externe 52c du cadre 34 et sont fixées à ce cadre par soudage ou par des moyens de fixation du type vis-écrou par exemple (figure 7).

Le cadre 34 est seul visible en coupe axiale à la figure 8 et en perspective aux figures suivantes.

Le cadre 34 comprend :
- une première paroi tronconique 52 évasée vers l'aval et comportant un bord périphérique amont 52a et un bord périphérique aval 52b qui s'étend dans le prolongement de la paroi 52 et qui comporte la face 52c précitée, et
- une seconde paroi annulaire 54 qui s'étend radialement vers l'extérieur depuis cette face 52c.

Selon une des caractéristiques de l'invention, les parois 52, 54 voire également d'autres parois du cadre 34 sont réalisées d'une seule pièce (ou venues ensemble de matière). En effet, un des buts de l'invention est de réaliser un cadre 34 monobloc supprimant tout besoin d'assemblage de pièces. Le cadre 34 est par exemple réalisé en aluminium. Le cadre peut être continue sur 360° ou bien être sectorisé en deux ou plusieurs secteurs consécutifs.

Dans le cadre de la présente invention, le cadre 34 peut être réalisé par usinage d'un bloc de matière. Le bloc de matière peut se présenter sous la forme d'une plaque qui est découpée pour obtenir une forme annulaire dont les diamètres interne et externe correspondent aux diamètres interne Dint et externe Dext du cadre, à quelques millimètres près par exemple pour autoriser un usinage de finition. Cette plaque a une épaisseur maximale qui correspond à la dimension axiale maximale Emax1 du cadre. Emax1 est par exemple compris entre 150 et 250mm, et de préférence entre 200 et 220mm. Ce bloc ou cette plaque est alors destiné(e) à être usiné(e) pour former les parois 52, 54 et les autres parties du cadre qui seront détaillées dans ce qui suit.

Dans l'exemple représenté, le cadre 34 comprend une troisième paroi annulaire 56 qui s'étend radialement vers l'intérieur depuis une face tronconique interne 52d de la paroi 52.

Cette paroi 56 est également formée d'une seule pièce avec les parois 52, 54.

Dans l'exemple représenté, la paroi 56 a en section une forme générale en L inversé et comprend une branche annulaire radialement externe 56a dont la périphérie externe est reliée à la face 52d et dont la périphérie interne est reliée à un rebord annulaire 56b qui est ici orienté axialement vers l'amont. La branche 56a eut avoir une forme générale tronconique évasée de l'aval vers l'amont.

Un carénage annulaire de déviation 58 prend appui et est fixé d'une part sur le rebord 56b et sur une extrémité aval de la face 52d. Le carénage 58 comprend une partie d'extrémité aval 58a qui est plane et est appliquée sur la face 52d, le reste du carénage étant bombée ou incurvée avec une concavité orientée radialement vers l'extérieur et vers l'amont.

Comme on le voit à la figure 7, cette partie d'extrémité aval 58a du carénage 58 est située radialement à l'intérieur des actionneurs 44 et n'est donc pas interrompue par des passages nécessaires pour ces actionneurs.

Cette même figure permet de constater que les extrémités amont des grilles 38 sont parallèles à cette partie d'extrémité aval 58a. Ceci est dû au fait que le bord aval 58b de la paroi 52 s'étend dans le prolongement de cette paroi et a donc une forme tronconique dont les faces interne 52d et externe 52c sont parallèles vues en coupe.

Le bord amont 52a opposé de la paroi 52, appelé J-ring, a une forme spécifique en section qui permet son accrochage à un carter du turboréacteur, comme cela est bien connu de l'homme du métier.

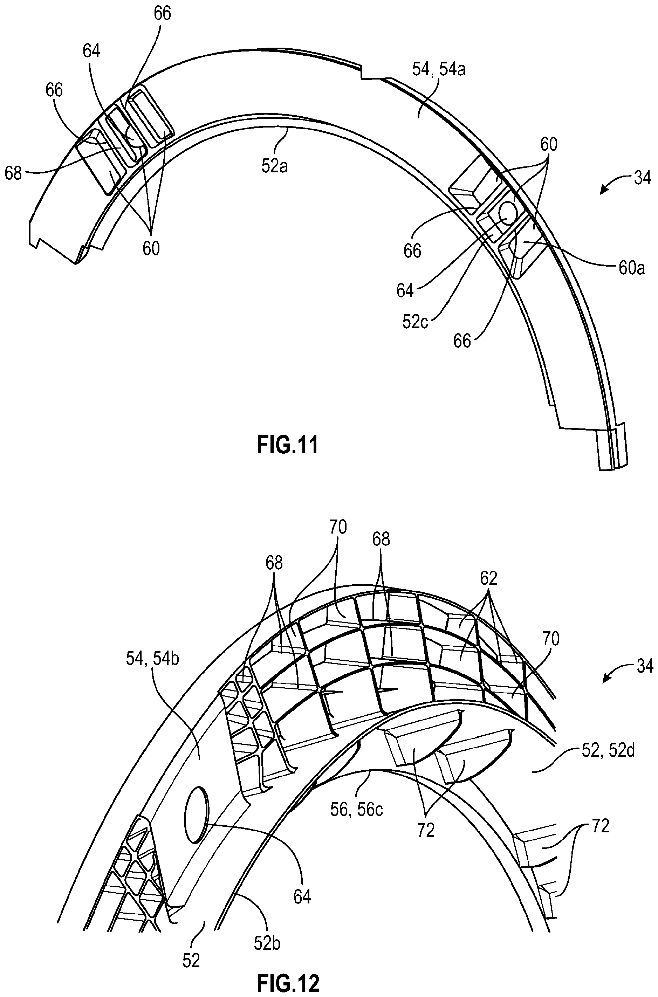

La paroi 54 a une épaisseur axiale Emax2 relativement importante et est évidée sur ces deux faces 54a, 54b par usinage (figures 8 à 10). La paroi 54 comprend ainsi une face amont 54a comportant des premiers évidements 60 (figures 10 et 11), et une face aval 54b présentant des seconds évidements 62 (figures 9 et 12).

Dans l'exemple représenté, il y a autant d'évidements 60 que d'actionneurs 44 car chaque actionneur est destiné à traverser un orifice 64 formé dans le fond 60a d'un évidement 60.

Chaque évidement 60 a une forme générale parallélépipédique et est ouvert axialement vers l'amont. Dans l'exemple représenté, l'évidement 60 est divisé en trois parties par deux cloisons 66 qui sont parallèles entre elles et à l'axe de l'inverseur. Les cloisons 66 sont reliées au fond 60a de l'évidement 60 et sont disposées de part et d'autre de l'orifice 64. En direction radiale, elles s'étendent en outre entre la face 52c et la périphérie externe de la paroi 54.

Les actionneurs 44 sont fixés à ces cloisons 66 qui peuvent comprendre deux orifices 68 alignés de réception et de fixation d'un axe (non représenté) de l'actionneur 44. Chaque actionneur 44 et en particulier son extrémité 44a ou son cylindre 44c est fixé au cadre 34 et plus particulièrement à des cloisons 66 du cadre.

Les évidements 62 permettent quant à eux d'alléger le cadre 34 tout en garantissant sa tenue mécanique. Pour cela, les évidements 62 de la face aval 54b peuvent se présenter sous la forme d'une multitude de cavités définies par des premiers voiles annulaires 68 et des seconds voiles radiaux 70, comme cela est visible à la figure 12. La figure 12 permet également de voir que le cadre 34 comprend des nervures de rigidification 72 qui s'étendent radialement entre la face tronconique interne 52d et une face annulaire aval 56c de la paroi 56.

La réalisation du cadre 34 d'une seule pièce apporte plusieurs avantages évoqués plus haut. Elle évite notamment l'assemblage de pièces. Elle permet en outre d'intégrer plusieurs fonctions dans ce cadre et notamment la fixation au carter par le bord 52a, la fixation aux grilles par le bord 52b, la traversée des actionneurs 44 par les orifices 60 de la paroi 54, la fixation des actionneurs 44 par les cloisons 66, l'allègement et le renforcement du cadre 34 par les voiles 68, 70 et les nervures 72, etc.

L'alignement des grilles 38 dans le prolongement de la paroi tronconique 52 est également avantageuse car elle optimise l'écoulement du flux secondaire F11 à travers les grilles en position d'inversion de poussée. Il permet en effet de rapprocher les extrémités amont 38a des grilles 38 de l'extrémité aval du carénage 58 et donc de guider le flux juste après sa sortie du carénage, limitant ainsi les risques de décollement d'air sur ce dernier. Il est alors envisageable de réduire la dimension axiale de ce carénage pour davantage limiter ce risque de décollement.

## Revendications

1. Inverseur de poussée (30) pour une nacelle d'un turboréacteur à double flux d'aéronef, cet inverseur de poussée ayant une forme générale annulaire autour d'un axe et comportant :
- une partie amont (32) fixe comportant un cadre annulaire (34),
- un support annulaire aval (36),
- des grilles de déviation (38) dont des extrémités amont (38a) sont fixées audit cadre (34) et dont des extrémités aval (38b) sont fixées audit support (36),
- des capots (40) mobiles en translation depuis une position amont dans laquelle ils recouvrent les grilles (38) jusqu'à une position aval d'inversion de poussée dans laquelle les grilles sont découvertes,
- des éléments (42) de déviation d'un flux secondaire (F11) du turboréacteur à travers les grilles (38) lorsque les capots (40) sont dans leur position aval, et
- des actionneurs (44) de forme allongée dont des extrémités amont (44a) sont fixées à la partie fixe (32) et dont des extrémités aval (44b) sont fixées auxdits capots (40),
**caractérisé en ce que** ledit cadre (34) comprend :
- une première paroi (52) tronconique évasée vers l'aval et comportant un bord périphérique amont (52a) configuré pour être fixé à un carter du turboréacteur, et un bord périphérique aval (52b) s'étendant dans le prolongement de la paroi et servant à la fixation des extrémités amont (38a) des grilles (38), et
- une seconde paroi annulaire (54) qui s'étend radialement vers l'extérieur depuis une face tronconique externe (52c) de ladite première paroi (52),
lesdites première et seconde parois (52, 54) étant réalisées d'une seule pièce et ladite seconde paroi (54) comportant des orifices (64) axiaux traversés par lesdits actionneurs (44).

2. Inverseur de poussée (30) selon la revendication 1, dans lequel lesdits actionneurs (44) s'étendent parallèlement audit axe.

3. Inverseur de poussée (30) selon la revendication 1 ou 2, dans lequel chacune desdites grilles (38) s'étend dans un plan (P) qui est incliné d'un angle (α) compris entre 5 et 20° par rapport audit axe.

4. Inverseur de poussée (30) selon l'ensemble des revendications 1 et 2, dans lequel lesdits actionneurs (44) s'étendent chacun entre deux grilles (38) adjacentes et traversent chacun les plans (P) de ces grilles.

5. Inverseur de poussée (30) selon l'une des revendications précédentes, dans lequel lesdits actionneurs (44) ont leurs extrémités aval (44b) qui sont entourées à distance par ledit support (36).

6. Inverseur de poussée (30) selon l'une des revendications précédentes, dans lequel ladite seconde paroi (54) présente une face amont comportant des premiers évidements (60) et une face aval présentant des seconds évidements (62), lesdits orifices (64) étant formés au fond (60a) desdits premiers évidements (60).

7. Inverseur de poussée (30) selon la revendication précédente, dans lequel au moins deux cloisons (66) parallèles entre elles et audit axe s'étendent dans chacun desdits premiers évidements (60), ces cloisons étant reliées au fond (60a) de l'évidement et étant disposées de part et d'autre dudit orifice (64).

8. Inverseur de poussée (30) selon la revendication précédente, dans lequel les actionneurs (44) sont fixés auxdites cloisons (66).

9. Inverseur de poussée (30) selon l'une des revendications 6 à 8, dans lequel lesdits seconds évidements (62) sont formés par une multitude de cavités définies par des premiers voiles annulaires (68) et des seconds voiles radiaux (70).

10. Inverseur de poussée (30) selon l'une des revendications précédentes, dans lequel le cadre (34) comprend une troisième paroi annulaire (56) qui s'étend radialement vers l'intérieur depuis une face tronconique interne (52d) de ladite première paroi, des nervures de rigidification (72) s'étendant radialement entre cette face tronconique interne (52d) et une face annulaire aval (56c) de cette troisième paroi (56).

11. Inverseur de poussée (30) selon la revendication précédente, dans lequel un carénage annulaire de déviation (58) prend appui et est fixé d'une part sur une périphérie interne de ladite troisième paroi (56) et sur une extrémité aval de ladite face tronconique interne (52d).

12. Turboréacteur à double flux pour un aéronef, comportant un inverseur de poussée (30) selon l'une des revendications précédentes.

## Patentansprüche

1. Schubumkehrsystem (30) für eine Gondel eines Zweikreis-Turbotriebwerks eines Luftfahrzeugs, wobei dieses Schubumkehrsystem eine allgemein ringförmige Form um eine Achse herum aufweist und umfasst:
- einen stationären vorgelagerten Teil (32), umfassend einen ringförmigen Rahmen (34),
- einen nachgelagerten ringförmigen Träger (36),
- Umlenkgitter (38), von denen vorgelagerten Enden (38a) an dem Rahmen (34) befestigt sind und von denen nachgelagerten Enden (38b) an dem Träger (36) befestigt sind,
- Abdeckhauben (40), die ab einer vorgelagerten Position, in der sie die Gitter (38) bedecken, bis zu einer nachgelagerten Schubumkehrposition translationsbeweglich sind, in der die Gitter aufgedeckt sind,
- Umlenkelemente (42) eines sekundären Stroms (F11) des Turbotriebwerks quer über den Gittern (38), wenn die Abdeckhauben (40) in ihrer nachgelagerten Position vorliegen, und
- Betätigungsvorrichtungen (44) von länglicher Form, von denen vorgelagerten Enden (44a) an dem stationären Teil (32) befestigt sind und von denen nachgelagerten Enden (44b) an den Abdeckhauben (40) befestigt sind,
**dadurch gekennzeichnet, dass** der Rahmen (34) umfasst:
- eine erste kegelstumpfförmige Wand (52), die in nachgelagerter Richtung aufgeweitet ist und einen vorgelagerten peripheren Rand (52a), der konfiguriert ist, um an einem Gehäuse des Turbotriebwerks befestigt zu werden, und einen nachgelagerten peripheren Rand (52b) umfasst, der sich in der Verlängerung der Wand erstreckt und zur Befestigung der vorgelagerten Enden (38a) der Gitter (38) dient, und
- eine zweite ringförmige Wand (54), die sich ab einer externen kegelstumpfförmigen Fläche (52c) der ersten Wand (52) radial in Richtung der Außenseite erstreckt, wobei die erste und zweite Wand (52, 54) aus einem einzelnen Stück hergestellt sind und die zweite Wand (54) axiale Öffnungen (64) umfasst, die von den Betätigungsvorrichtungen (44) durchquert werden.

2. Schubumkehrsystem (30) nach Anspruch 1, wobei die Betätigungsvorrichtungen (44) sich parallel zu der Achse erstrecken.

3. Schubumkehrsystem (30) nach Anspruch 1 oder 2, wobei jedes der Gitter (38) sich in einer Ebene (P) erstreckt, die um einen Winkel (α) geneigt ist, der bezüglich der Achse zwischen 5 und 20° liegt.

4. Schubumkehrvorrichtung (30) nach der Gesamtheit der Ansprüche 1 und 2, wobei sich die Betätigungsvorrichtungen (44) jeweils zwischen zwei benachbarten Gittern (38) erstrecken und jeweils die Ebenen (P) dieser Gitter durchqueren.

5. Schubumkehrsystem (30) nach einem der vorstehenden Ansprüche, wobei die Betätigungsvorrichtungen (44) ihre nachgelagerten Enden (44b) aufweisen, die in einem Abstand von dem Träger (36) umgeben sind.

6. Schubumkehrsystem (30) nach einem der vorstehenden Ansprüche, wobei die zweite Wand (54) eine vorgelagerte Fläche, die erste Aussparungen (60) umfasst, und eine nachgelagerte Fläche aufweist, die zweite Aussparungen (62) aufweist, wobei die Öffnungen (64) am Boden (60a) der ersten Aussparungen (60) gebildet sind.

7. Schubumkehrsystem (30) nach der vorstehenden Anspruch, wobei mindestens zwei untereinander und zu der Achse parallele Trennwände (66) sich in jeder der ersten Aussparungen (60) erstrecken, wobei diese Trennwände mit dem Boden (60a) der Aussparung verbunden sind und auf beiden Seiten der Öffnung (64) angeordnet sind.

8. Schubumkehrsystem (30) nach dem vorstehenden Anspruch, wobei die Betätigungsvorrichtungen (44) an den Trennwänden (66) befestigt sind.

9. Schubumkehrsystem (30) nach einem der Ansprüche 6 bis 8, wobei die zweiten Aussparungen (62) durch eine Vielfalt von Hohlräumen gebildet werden, die durch erste ringförmige Leitbleche (68) und zweite radiale Leitbleche (70) definiert sind.

10. Schubumkehrsystem (30) nach einem der vorstehenden Ansprüche, wobei der Rahmen (34) eine dritte ringförmige Wand (56), die sich ab einer internen kegelstumpfförmigen Fläche (52d) der ersten Wand radial in Richtung der Innenseite erstreckt, Versteifungsrippen (72), die sich radial zwischen dieser internen kegelstumpfförmigen Fläche (52d) und einer nachgelagerten ringförmigen Fläche (56c) dieser dritten Wand (56) erstrecken, umfasst.

11. Schubumkehrsystem (30) nach dem vorstehenden Anspruch, wobei eine ringförmige Umlenkverkleidung (58) an einer internen Peripherie der dritten Wand (56) anliegt und einerseits daran befestigt ist und an einem nachgelagerten Ende der internen kegelstumpfförmigen Fläche (52d) befestigt ist.

12. Zweikreis-Turbotriebwerk für ein Luftfahrzeug, das ein Schubumkehrsystem (30) nach einem der vorstehenden Ansprüche umfasst.

## Claims

1. A thrust reverser (30) for a nacelle of an aircraft bypass turbojet engine, this thrust reverser having a generally annular shape around an axis and comprising:
- a fixed upstream part (32) comprising an annular frame (34),
- a downstream annular support (36),
- deflection grids (38), the upstream ends (38a) of which are secured to said frame (34) and the downstream ends (38b) of which are secured to said support (36),
- cowls (40) that can be moved in translation from an upstream position in which they cover the grids (38) to a thrust reversal downstream position in which the grids are uncovered,
- elements (42) for deflecting a secondary flux (F11) of the turbojet engine through the grids (38) when the cowls (40) are in their downstream position, and
- actuators (44) of elongated shape, the upstream ends (44a) of which are secured to the fixed part (32) and the downstream ends (44b) of which are secured to said cowls (40),
**characterised in that** said frame (34) comprises:
- a first frustoconical wall (52) widening in the downstream direction and comprising an upstream peripheral edge (52a) configured to be secured to a casing of the turbojet engine, and a downstream peripheral edge (52b) extending in the continuation of the wall and being used to secured the upstream ends (38a) of the grids (38), and
- a second annular wall (54) extending radially outwards from an external frustoconical face (52c) of said first wall (52),
said first and second walls (52, 54) being integrally formed and said second wall (54) comprising axial orifices (64) through which said actuators (44) pass.

2. The thrust reverser (30) according to claim 1, wherein said actuators (44) extend parallel to said axis.

3. The thrust reverser (30) according to claim 1 or 2, wherein each of said grids (38) extends in a plane (P) which is inclined by an angle (α) comprised between 5° and 20° with respect to said axis.

4. The thrust reverser (30) according to all of claims 1 and 2, wherein said actuators (44) each extend between two adjacent grids (38) and each pass through the planes (P) of those grids.

5. The thrust reverser (30) according to one of the preceding claims, wherein said actuators (44) have their downstream ends (44b) which are remotely surrounded by said support (36).

6. The thrust reverser (30) according to one of the preceding claims, wherein said second wall (54) has an upstream face comprising first recesses (60) and a downstream face having second recesses (62), said orifices (64) being formed at the bottom (60a) of said first recesses (60).

7. The thrust reverser (30) according to the preceding claim, wherein at least two partitions (66) parallel to each other and to said axis extend in each of said first recesses (60), these partitions being connected to the bottom (60a) of the recess and being disposed on either side of said orifice (64).

8. The thrust reverser (30) according to the preceding claim, wherein the actuators (44) are secured to said partitions (66).

9. The thrust reverser (30) according to one of claims 6 to 8, wherein said second recesses (62) are formed by a multitude of cavities defined by first annular webs (68) and second radial webs (70).

10. The thrust reverser (30) according to one of the preceding claims, wherein the frame (34) comprises a third annular wall (56) which extends radially inwards from an internal frustoconical face (52d) of said first wall, stiffening ribs (72) extending radially between this internal frustoconical face (52d) and a downstream annular face (56c) of this third wall (56).

11. The thrust reverser (30) according to the preceding claim, wherein an annular deflection fairing (58) bears on and is secured to an internal periphery of said third wall (56) and on a downstream end of said internal frustoconical face (52d).

12. A bypass turbojet engine for an aircraft, comprising a thrust reverser (30) according to one of the preceding claims.
